# EUROPÄISCHE PATENTSCHRIFT

(11) **EP 4 363 759 B1**
(45) Veröffentlichungstag und Bekanntmachung des Hinweises auf die Patenterteilung: **05.03.2025**
(21) Anmeldenummer: 22738418.7
(22) Anmeldetag: 27.06.2022
(51) Int. Cl.: F17C 7/00, B60K 15/00, F02M 21/02

(54) **KRAFTSTOFFSYSTEM FÜR EINEN DRUCKTANK UND FÜR EIN GASBETRIEBENES FAHRZEUG**
FUEL SYSTEM FOR A PRESSURE TANK AND FOR A GAS-POWERED VEHICLE
SYSTÈME DE CARBURANT POUR UN RÉSERVOIR SOUS PRESSION ET POUR UN VÉHICULE À GAZ

(30) Priorität: 28.06.2021 DE 102021116567
(43) Veröffentlichungstag der Anmeldung: 08.05.2024
(73) Patentinhaber: Voith Patent GmbH, 89522 Heidenheim (DE)
(72) Erfinder: FRENZ, Hartmut, 73072 Donzdorf (DE); KRAPP, Stefan, 73431 Aalen (DE)
(74) Vertreter: Voith Patent GmbH - Patentabteilung
(86) Internationale Anmeldenummer: PCT/EP2022/067471
(87) Internationale Veröffentlichungsnummer: WO 2023/274902

(56) Entgegenhaltungen:
- WO-A1-2020/079329
- DE-U1- 20 318 684
- FR-A1- 2 857 632
- FR-A1- 2 985 783
- US-A1- 2009 055 077
- US-B2- 8 132 561

## Beschreibung

Die Erfindung betrifft ein Kraftstoffsystem zum Einbau in einem Wasserstoff-betriebenen Fahrzeug vorgesehen und für einen oder mehrere Wasserstoff-Drucktanks, auf Hochdruck-Niveau mit mindestens 200 bar ausgelegt, wobei das Kraftstoffsystem einen Anschluss für eine Eingangsleitung, einen Anschluss für eine Ausgangsleitung und einen Druckminderer umfasst. Und wobei der Druckminderer so ausgeführt ist, dass er den Druck des Wasserstoffs vom Hochdruck-Niveau aus dem Drucktank auf ein Mitteldruck-Niveau zwischen 3 bar und 30 bar reduzieren kann.

Wasserstoff-betriebene Fahrzeuge haben beispielsweise einen Gasmotor oder eine Brennstoffzelle mit Elektromotor als Antrieb. Um ausreichend Treibstoff speichern zu können, wird der Wasserstoff unter hohem Druck im Tank gespeichert. Typisch für solche Drucktanks sind Drücke von über 200 bar, oftmals 350 bar oder 700 bar und teilweise sogar bis 875 bar. Da der Gasmotor oder die Brennstoffzelle bei niedrigerem Eingangsdruck betrieben wird, muss der Druck zuverlässig vom Hochdruck-Niveau auf ein Niederdruck-Niveau geregelt werden.

Im Stand der Technik sind Kraftstoffsysteme für Wasserstoff-Drucktanks und zum Einbau in einem Wasserstoff-betriebenen Fahrzeuge bekannt. Solche werden beispielsweise in der DE 102019200459 A1, in der WO 2020/079329 A1, in der FR 2 985 783 A1 und in der DE 102017214184 A1 beschrieben. Mit einem Druckminderer wird das Druckniveau vom Tankdruck auf das geforderte niedrigere Druckniveau für eine Brennstoffzelle reduziert. Über eine Steuereinrichtung und einen Drucksensor am Drucktank kann gegebenenfalls der Füllstand bestimmt und mit einer Tankstelle kommuniziert werden. Darüber hinaus weist das Kraftstoffsystem Absperrventile und Rohrleitungen auf, die über entsprechende Verschraubungen verbunden werden. Werden mehrerer Drucktanks parallel angeschlossen, so kommen noch Verteilerstellen für die verschiedenen Tankleitungen dazu. All diese Komponenten und Verbindungsstellen müssen nach dem Einbau getestet und geprüft werden. Das verursacht erheblichen Aufwand und birgt Risiken in Bezug auf fehlerhafte Montage und entsprechende Undichtigkeit.

Die Aufgabe der Erfindung ist es nun, ein Kraftstoffsystem für ein Wasserstoff-betriebenes Fahrzeug weiterzuentwickeln und zu verbessern, so dass es zuverlässig und sicher betrieben werden kann und schnell und fehlerfrei montiert werden kann.

Die Aufgabe wird durch ein Kraftstoffsystem gemäß Anspruch 1 gelöst. Weitere vorteilhafte Merkmale sind in den abhängigen Ansprüchen genannt.

Erfindungsgemäß zeichnet sich das Kraftstoffsystem nach Anspruch 1 dadurch aus, dass es zumindest folgende interne Komponenten umfasst:
Einen Druckminderer, einen Gasfilter, ein Absperrventil, ein Entlüftungsventil, ein Überdruck-Sicherheitsventil und einen Drucksensor, wobei der Druckminderer als zweistufiger Druckminderer ausgeführt ist, derart dass dieser in der ersten Stufe den Druck aus dem Drucktank auf ein Zwischen-Niveau zwischen 40 und 80 bar reduziert und in der zweiten Stufe den Druck weiter auf das Mitteldruck-Niveau reduziert, und wobei die internen Komponenten und Gasleitungen, die diese internen Komponenten miteinander verbinden, in einer integralen und in sich tragenden Baueinheit angeordnet sind.

Besonders bevorzugt liegt das Mitteldruck-Niveau zwischen 10 und 25 bar. Durch einen zweistufigen Druckminderer ist eine genauere Druckeinstellung möglich.

Um das Kraftstoffsystem zuverlässiger und sicherer im Betrieb zu machen, umfasst es neben dem Druckminderer noch weitere Komponenten. Ein Entlüftungsventil, über welches das System gespült werden kann, zum Beispiel nach Wartungsarbeiten. Einen Gasfilter, der kleinere Verunreinigungen aus den Drucktanks zurückhält und so für einen hochreinen Wasserstoff sorgt, wie er für eine längere Lebensdauer einer Brennstoffzelle nötig ist. Ein Absperrventil, mit dem das Kraftstoffsystem gegenüber der Brennstoffzelle oder dem Gasmotor abgesperrt werden kann. Ein Überdruck-Sicherheitsventil, das das Kraftstoffsystem gegen zu hohe Drücke absichert und welches bevorzugt in Durchflussrichtung nach dem Druckminderer angeordnet ist. Ein Drucksensor zur Messung des Zustandes des Wasserstoff-Gases. Aus diesen Messwerten kann - gegebenenfalls zusammen mit Messwerten von Sensoren am Drucktank - zuverlässiger und genauer bestimmt werden, wie viel Wasserstoff im Drucktank vorhanden ist. Das ist eine wichtige Information für die Berechnung der Reichweite eines Fahrzeugs und für den Tankvorgang.

Zudem sind alle internen Komponenten, sowie entsprechende Gasleitungen, die die internen Komponenten miteinander verbinden, in einer integralen und in sich tragenden Baueinheit angeordnet. Das bietet den Vorteil, dass das erfindungsgemäße Kraftstoffsystem unabhängig vom Fahrzeug und unabhängig vom Drucktank als eine Baugruppe vormontiert werden kann. Dieses als Baugruppe vormontierte Kraftstoffsystem kann dann auch vorab getestet und sicherheitstechnisch und qualitätstechnisch abgenommen werden. Dadurch kann das Kraftstoffsystem erstmalig als abgeschlossene Baugruppe angeboten werden. Der Einbau im Fahrzeug ist weniger aufwändig, da nur noch wenige Anschlüsse verbunden werden müssen und alle internen Komponenten und Verbindungen bereits auf Funktion und Undichtigkeit getestet sind. Die Befestigung ist einfacher, da die in sich tragende Baueinheit nur wenige Befestigungspunkte benötigt und als eine Baugruppe montiert werden kann. Zudem wird die Anzahl der Verschraubungen im gesamten Kraftstoffsystem erheblich reduziert.

Die integrale, in sich selbst tragende Baueinheit kann bevorzugt ganz oder teilweise mit einem Aluminium-Druckguss-Gehäuse ausgeführt sein. Darin können zum Beispiel Ventilsitze und/oder Kanäle als Gasleitungen integriert werden. Die zur Ventilmontage oder zur Montage anderer Komponenten notwendigen Öffnungen oder Hohlräume können mit Dichtungen und Deckeln verschlossen werden. Die integrale, in sich selbst tragende Baueinheit kann auch aus mehreren Teilen zusammengesetzt sein. Beispielsweise kann eine Teileinheit mit einem Aluminium-Druckguss-Gehäuse ausgeführt werden und weitere Komponenten sind an dieser Teileinheit befestigt. Erfindungsgemäß gibt es allerdings keine verschraubten, frei liegenden Rohrleitungen zwischen den Teilen oder den Komponenten, um die Zuverlässigkeit und einfache Montage nicht zu beeinträchtigen.

In einer weiteren erfindungsgemäßen Ausführung umfasst das Kraftstoffsystem als interne Komponenten noch ein zweites Entlüftungsventil, wobei bevorzugt beide Entlüftungsventile mit einer gemeinsamen Spülleitung verbunden sind, welche durch das Gehäuse nach außen führt. Insbesondere ist das eine Entlüftungsventil vor dem Druckminderer und das andere Entlüftungsventil nach dem Druckminderer angeordnet. So kann sowohl die Hochdruckseite als auch die Mitteldruckseite zuverlässig gespült werden. Zudem können auch noch weitere Entlüftungsventile vorgesehen werden, insbesondere bei Verwendung eines zweistufigen Druckminderer.

Weiterhin ist es von Vorteil, wenn als interne Komponenten zumindest ein Rückschlagventil und eine Verteilung auf mehrere Tankleitungen vorhanden sind, wobei die Tankleitungen nach außen führen und wobei für jeden Drucktank ein Anschluss vorhanden ist. Durch die zusätzliche Integration der Verteilung und des Rückschlagventils auf der Eingangsseite in die Baueinheit und damit in die Baugruppe des Kraftstoffsystems wird der Montage- und Testaufwand am Fahrzeug noch weiter reduziert. Der größte Teil der Verbindungsstellen und Verschraubungen ist somit intern im Kraftstoffsystem angeordnet und bereits vorab montiert und vorab getestet worden, wenn die Baugruppe im Fahrzeug eingebaut wird. Darüber hinaus ist es von Vorteil, wenn an der Eingangsleitung direkt der Tankstutzen angeschlossen ist und somit ein Teil des Kraftstoffsystems ist. Dadurch wird die Montage im Fahrzeug noch weiter vereinfacht.

Bevorzugt ist der Druckminderer über eine Federbelastung auf das jeweilige, gewünschte Druckniveau einstellbar.

Um zu große Temperaturänderungen bei höheren Volumenströmen durch das Kraftstoffsystem und bei starken Druckänderungen zu vermeiden, kann es von Vorteil sein, wenn am Druckminderer eine Kühleinrichtung vorgesehen ist. Die Kühleinrichtung kann bevorzugt als Wärmetauscher mit fluiddurchströmten Kanälen ausgeführt sein. Diese Kanäle können im gemeinsamen Gehäuse vorgesehen oder in dieses eingearbeitet sein. Insbesondere kann dieser Wärmetauscher so ausgeführt sein, dass er mit einem Kühlmittelsystem des Fahrzeuges verbindbar ist.

In einer bevorzugten Ausführung umfasst das Kraftstoffsystem zusätzlich eine elektronische Tanksteuereinheit, welche an der Baueinheit befestigt und von dieser getragen ist, wobei die Tanksteuereinheit geeignet ist, zumindest die Signale der am Kraftstoffsystem vorhandenen Sensoren zu empfangen und zu verarbeiten und eines oder mehrere Ausgangssignale zu erzeugen. Durch die Integration des Kraftstoffsystems der elektronischen Tanksteuereinheit in das Kraftstoffsystem kann die Baugruppe noch umfangreicher vorab getestet werden und es sind noch weniger Schnittstellen bei der Montage im Fahrzeug zu beachten. Der Kabelbaum zwischen Tanksteuereinheit und den Sensoren in der Baueinheit kann somit auch integriert und von der Baueinheit getragen werden.

Weiter verbessert wird die Tanksteuereinheit, wenn sie so eingerichtet ist, dass sie von jedem Drucktank ein Temperatursensorsignal empfangen kann und insbesondere, wenn sie von jedem Drucktank auch noch ein Drucksensorsignal empfangen kann. Damit kann die Berechnung des Füllstandes der Drucktanks genauer und zuverlässiger erfolgen.

Zusätzlich kann die Tanksteuereinheit so eingerichtet sein, dass sie mit einer Wasserstoff-Tankstelle kommunizieren kann und insbesondere einen Tankvorgang steuern kann.

In einer besonders bevorzugten Ausführung ist als interne Komponente ein Temperatursensor vorhanden. Mit dem Temperatursensor kann der Zustand des Wasserstoffs überwacht werden und unter bestimmten Bedingungen die Wasserstoffmenge berechnet werden.

Insbesondere kann eine vereinfachte Ausführung Vorteile bieten, da sie kostengünstiger ist und weniger Komponenten enthält. Bei dieser erfindungsgemäßen Ausführung umfasst das Kraftstoffsystem als interne Sensoren nur genau einen Drucksensor und genau einen Temperatursensor, jeweils vor dem Druckminderer angeordnet.

In einer weiteren vorteilhaften Ausführung sind als interne Komponenten noch ein zweiter Drucksensor und/oder noch ein zweiter Temperatursensor vorhanden sind, wobei bevorzugt ein Drucksensor und ein Temperatursensor vor dem Druckminderer und ein Drucksensor und ein Temperatursensor nach dem Druckminderer angeordnet sind. Durch diese zusätzlichen Sensoren wird die Bestimmung der Zustände des durchströmenden Wasserstoff-Gases genauer erfasst und somit die Berechnung der Wasserstoffmengen genauer und zuverlässiger. Zudem können Fehlfunktionen oder Undichtigkeiten besser erkannt werden, was die Sicherheit des Systems erhöht.

Als Erweiterung kann als interne Komponente noch ein Wasserstoff-Reinheitssensor vorgesehen werden. Bevorzugt wird dieser in Durchflussrichtung nach dem Druckminderer angeordnet. Mit diesem zusätzlichen Sensor kann gewährleistet werden, dass zum Beispiel eine nachfolgende Brennstoffzelle ausreichend sauberen Wasserstoff zugeführt bekommt und somit die Funktion der Brennstoffzelle erhalten und ihre Lebensdauer verlängert wird. Eine notwendige Wartung oder ein notwendiger Austausch des Gasfilters wird rechtzeitig erkannt.

Besonders bevorzugt sind die internen Komponenten in Durchflussrichtung in folgender Reihenfolge von der Eingangsleitung bis zur Ausgangsleitung angeordnet: Gasfilter, Druckminderer, Entlüftungsventil, Überdruck-Sicherheitsventil, Absperrventil. Weitere vorhandene interne Komponenten können zwischen diesen Komponenten oder vor diesen oder danach angeordnet sein. Die genannte Reihenfolge bietet eine besonders gute Funktionalität.

Ebenso wird eine Ausführung von Erfindung umfasst, bei der die Baueinheit aus mehreren Teileinheiten zusammengesetzt ist, die so aneinander befestigt sind, dass sie die in sich tragende Baueinheit bilden.

Insbesondere kann die Baueinheit eine Teileinheit umfassen, welche ein Gehäuse, bevorzugt aus einem Alu-Guss-Werkstoff, aufweist, in welchem zumindest die folgenden internen Komponenten angeordnet sind: der Druckminderer, der Drucksensor, das Entlüftungsventil, das Überdruck-Sicherheitsventil und das Absperrventil. Dabei ist in diesem Zusammenhang mit "angeordnet" gemeint, dass bei den Ventilen und ganz besonders beim Absperrventil es ausreichend ist, wenn zumindest der Ventilsitz in der Teileinheit angeordnet ist.

Weiterhin ist es von Vorteil, wenn die Baueinheit eine im Wesentlichen prismaförmige Gestalt mit zwei Stirnseiten aufweist, wobei die Stirnseiten bevorzugt dreiecksähnlich oder bevorzugt Parallelogramm-ähnlich ausgeführt sind. Durch diese Form der Baueinheit lässt sich das Kraftstoffsystem platzsparend zwischen den Drucktanks am Fahrzeug unterbringen. Die Drucktanks sind langgestreckt und zylinderförmig, so dass die Baueinheit mit seiner dreiecksähnlichen oder Parallelogramm-ähnlichen Querschnittsform sehr gut in den Lücken zwischen den Drucktanks angeordnet werden kann, ohne zusätzlichen Bauraum zu benötigen.

Unter dreiecksähnlicher Stirnseite wird in diesem Zusammenhang neben einem exakten Dreieck auch verstanden, wenn die Begrenzungslinien des Dreiecks leicht bogenförmig oder mit einzelnen Ausstülpungen oder Einbuchtungen ausgeführt sind. Entscheidend ist in diesem Zusammenhang, dass die Stirnseiten im Wesentlichen einer Dreiecksform ähneln. Gleiches gilt analog für die Parallelogramm-ähnlichen Stirnseiten.

Insbesondere ist es vorteilhaft, dass der Anschluss für die Eingangsleitung und/oder der Anschluss für die Ausgangsleitung jeweils auf einer der Stirnseiten angeordnet sind. Dadurch sind sie gut zugänglich und können einfach montiert und auch gewartet werden.

Um eine weiter vereinfachte Montage zu ermöglichen, ist es vorteilhaft, wenn die Baueinheit Befestigungsmöglichkeiten aufweist, über die das Kraftstoffsystem an einer Tragstruktur, die die Drucktanks im Fahrzeug befestigt, montiert werden kann. Somit kann gegebenenfalls das Kraftstoffsystem an einem Tankmodul, das eine Tragstruktur und mehrere Drucktanks umfasst, befestigt werden und mit den Tankleitungen der Drucktanks bereits vorab verbunden werden. Das Tankmodul inklusive Kraftstoffsystem wird dann als eine Gesamteinheit im Fahrzeug verbaut.

Die Montagezeit in der Fertigungslinie der Fahrzeug-Hersteller ist somit weiter minimiert, was einen großen Vorteil darstellt.

Anhand von Ausführungsbeispielen werden weitere vorteilhafte Merkmale der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- **Fig.1**: Schematische Darstellung eines erfindungsgemäßen Kraftstoffsystems
- **Fig.2a,b**: Beispiele für die geometrische Form des Gehäuses
- **Fig.3**: weiteres erfindungsgemäßes Kraftstoffsystem

Nachfolgend werden die Figuren detaillierter beschrieben. Gleiche Bezugszahlen bezeichnen gleiche beziehungsweise analoge Bauteile oder Komponenten.

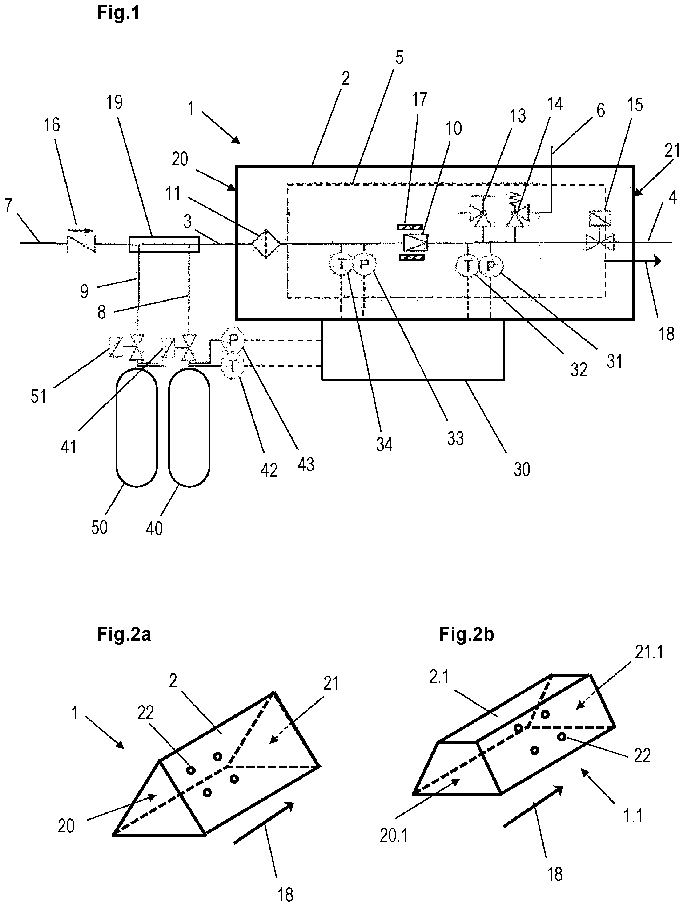

Die **Fig.1** zeigt schematisch eine erfindungsgemäße Ausführung eines Kraftstoffsystems 1 für ein Wasserstoff-betriebenes Fahrzeug. Die Größenverhältnisse und die Position in Bezug auf die Drucktanks 40,50 sind nicht maßstäblich. Das Kraftstoffsystem 1 ist in dieser Ausführung über die Eingangsleitung 3 an den Verteiler 19 angeschlossen, der zum einen die Tankleitungen 8,9 und zum anderen den Tankstutzen 7 mit dem Kraftstoffsystem 1 verbindet. Dargestellt sind exemplarisch nur zwei Drucktanks 40,50, es können aber auch mehrere Drucktanks angeschlossen werden.

Als interne Komponenten sind der Druckminderer 10, der zweistufig ausgebildet ist, der Gasfilter 11, das Entlüftungsventil 13, sowie das Überdruck-Sicherheitsventil 14 und das Absperrventil 15 vor der Ausgangsleitung 4 vorhanden. All diese internen Komponenten sind in oder an der integralen und in sich tragenden Baueinheit 2 eingebaut. Die Durchflussrichtung von der Eingangsleitung 3 zur Ausgangsleitung 4 ist mit 18 bezeichnet. An die Ausgangsleitung 4 kann ein Verbraucher, wie zum Beispiel eine Brennstoffzelle oder ein Gasmotor angeschlossen werden. Des Weiteren ist zumindest ein Drucksensor 31,33 und zumindest ein Temperatursensor 32,34 als interne Komponente vorhanden.

Durch die Verwendung der genannten internen Komponenten und die Integration in eine Baueinheit 2 wird das Kraftstoffsystem zuverlässiger. Das Kraftstoffsystem 1 als Baueinheit 2 kann vorab montiert und auf Funktion und Dichtigkeit getestet werden, so dass es bei der Fahrzeugmontage als eine Baugruppe mit wenigen Schnittstellen sehr viel schneller und zuverlässiger als bei bisherigen Kraftstoffsystemen montiert werden kann. Zudem müssen dann auch nur noch diese wenigen Schnittstellen auf Dichtigkeit geprüft werden.

Mehrere der internen Komponenten können wie hier dargestellt in einem Gehäuse als Teileinheit angeordnet sein. Die weiteren Komponenten oder Teileinheiten sind so mit dieser Teileinheit verbunden, dass sie die Baueinheit 2 bilden. Das Gehäuse 5 der Teileinheit ist bevorzugt aus einem Alu-Guss-Material hergestellt. In der dargestellten Ausführung umfasst diese Teileinheit den Druckminderer 10, das Entlüftungsventil 13, das Überdruck-Sicherheitsventil 14 und das Absperrventil 15. Und optional Druck- und Temperatursensoren sowie gegebenenfalls die Kühleinrichtung 17, soweit vorgesehen. Insbesondere kann das Gehäuse 5 als Grundkörper der Teileinheit ausgeführt werden, in welchen die nötigen Ventilsitze, Öffnungen oder Hohlräume für die Sensoren, sowie die Gasleitungen, zum Beispiel als strömungsoptimierte Kanäle, eingearbeitet sind.

Das Absperrventil 15 ist bevorzugt als elektromagnetisches Ventil ausgeführt. Der Druckminderer 10 zweistufig und bevorzugt federbelastet auf die gewünschten Druckniveaus eingestellt. Das Entlüftungsventil 13 hat eine Spülleitung, die durch das Gehäuse nach außen führt. In der Zeichnung bei Ventil 13 nur angedeutet. Das Entlüftungsventil 13 ist bevorzugt als manuelles Ventil ausgeführt, da es nur bei Inbetriebnahme oder Wartungsarbeiten benötigt wird.

Das Überdruck-Sicherheitsventil 15 sichert die Mitteldruck-Seite des Kraftstoffsystems, also den Bereich in Durchflussrichtung nach dem Druckminderer 10, gegen zu hohe Drücke ab. Es führt in eine Abblasleitung 6, die nach außen geht und an die außerhalb ein Schlauch oder eine weitere Leitung angeschlossen werden kann, zur sicheren Abführung des Wasserstoff-Gases im Notfall.

Zusätzlich ist optional in dieser Ausführung die elektronische Tanksteuereinheit 30 vorgesehen, welche an der Baueinheit 2 befestigt sein kann. Alternativ kann die Tanksteuereinheit auch als interne Komponente in der Baueinheit 2 angeordnet werden. Die Tanksteuereinheit 30 verarbeitet die Signale der internen Sensoren und zusätzlich die Signale der externen Sensoren, hier beispielsweise die der Drucksensoren 43, etc. und die der Temperatursensoren 42, etc. an den einzelnen Drucktanks 40,50. Damit ist eine zuverlässige Berechnung der Tankfüllstände und der Wasserstoffverbräuche möglich. Die Tanksteuereinheit 30 kann als Ausgangssignal beispielsweise die Tankfüllstände, eine Reichweite oder ähnliches ausgeben. Zudem kann sie gegebenenfalls mit einer Wasserstoff-Tankstelle kommunizieren, so dass der Tankvorgang optimal abläuft, oder sie kann den Tankvorgang in Kommunikation mit der Tankstelle steuern. Und die Tanksteuereinheit ist mit einer Brennstoffzelle oder einem Gasmotor verbunden, um Informationen und Signale auszutauschen.

Zusätzlich können ein zweiter Drucksensor 31,33 und/oder ein zweiter Temperatursensor 32,34 als interne Komponente, wie dargestellt, eingebaut sein. Damit werden die Berechnungen der Tankfüllstände, die Kommunikation mit einer Tankstelle und die Überwachung der Dichtigkeit sowie die Erkennung von Fehlfunktionen weiter verbessert.

Im Bereich des Druckminderer 10 kann eine Kühleinrichtung 17 vorgesehen sein, die dazu dient, zu starke Temperaturänderungen aufgrund der Druckentspannung des Wasserstoffs am Druckminderer 10 zu vermeiden.

Bevorzugt sind die Eingangsleitung 3 und die Ausgangsleitung 4 an gegenüberliegenden Stirnseiten 20, 21 des Gehäuses 2 vorgesehen. Das führt dazu, dass das Kraftstoffsystem 1 schlank ausgeführt werden kann und dass die Anschlüsse für den Tankstutzen 7 und zur Brennstoffzelle oder zum Gasmotor genug Platz haben.

In den **Fig. 2a** und **2b** sind mögliche Formen für integrale und in sich tragende Baueinheit 2, 2.1 schematisch vereinfacht dargestellt. Die Stirnflächen 20, 21 sind einmal dreiecks-ähnlich und einmal Parallelogramm-ähnlich 20.1, 21.1. In beiden Fällen sind darunter auch Flächen mit gebogenen Kanten oder mit Ausstülpungen oder Einbuchtungen zu verstehen, wie zuvor bereits beschrieben. Der Sinn der Formgebung ist, dass das Kraftstoffsystem 1, 1.1 platzsparend zwischen den zylinderförmigen Drucktanks angeordnet werden kann. Gezeigt sind auch die Befestigungsmöglichkeiten 22 jeweils auf einer der Seitenflächen der Baueinheit 2, 2.1. Über die Befestigungsmöglichkeiten 22 kann das Kraftstoffsystem 1, 1.1 an einer Tragstruktur montiert werden, die die Drucktanks trägt und am Fahrzeug befestigt ist. Über die gezeigten Baueinheit-Formen hinaus, sind weitere ähnliche Formen denkbar, die geeignet sind, so dass das Kraftstoffsystem in den Lücken zwischen den Drucktanks ohne zusätzlichen Platzbedarf angeordnet werden kann.

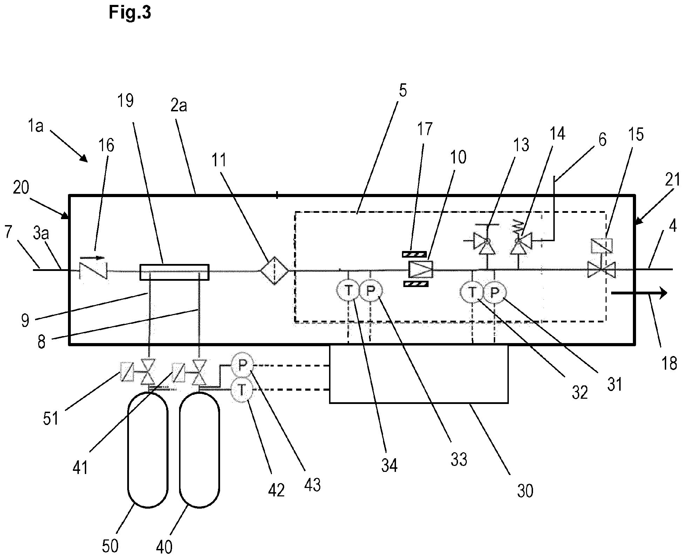

Die **Fig.3** zeigt eine weitere Ausführung des erfindungsgemäßen Kraftstoffsystems 1a. Die dargestellte Variante unterscheidet sich von der in Fig.1 gezeigten Ausführung dadurch, dass zusätzlich der Verteiler 19 auf die Tankleitungen 8,9, sowie das zumindest eine Rückschlagventil 16 als interne Komponenten an der Baueinheit 2a angeordnet sind. Dadurch gibt es noch weniger Schnittstellen, die bei der Fahrzeugmontage beachtet und geprüft werden müssen. Insbesondere kann der Tankstutzen 7 direkt an der Baueinheit 2a befestigt sein und von dieser getragen werden.

Der Temperatursensor 34 und/oder der Drucksensor 33 können vorteilhafterweise in dieser Ausführung auch an dem Verteiler 19 positioniert sein.

Als bevorzugte Ausführung kann das Gehäuse 5 als Grundkörper für die Teileinheit, insbesondere als Alu-Druckguss-Bauteil hergestellt werden, in welchen die nötigen Ventilsitze, Öffnungen oder Hohlräume für die Sensoren, sowie die Gasleitungen, zum Beispiel als strömungsoptimierte Kanäle, eingearbeitet sind. Wenn es mehrteilig ausgeführt ist, ist es wichtig, dass keine freien Rohrleitungen zwischen den Teilen vorgesehen sind. Sondern dass die Teile direkt miteinander verbunden, beispielsweise verschraubt werden.

Exemplarisch sind wiederum nur zwei Drucktanks gezeigt. Auch hier können mehrere Tankleitungen und mehrere Drucktanks angeschlossen werden.

### Bezugszeichenliste

- 1, 1a, 1.1: Kraftstoffsystem
- 2, 2a, 2.1: integrale und in sich tragende Baueinheit
- 3, 3a: Eingangsleitung
- 4: Ausgangsleitung
- 5: Gehäuse Teileinheit
- 6: Abblasleitung
- 7: Tankstutzen
- 8, 9: Tankleitung
- 10: Druckminderer
- 11: Gasfilter
- 13: Entlüftungsventil
- 14: Überdruck-Sicherheitsventil
- 15: Absperrventil
- 16: Rückschlagventil
- 17: Heizeinrichtung oder Kühleinrichtung
- 18: Durchflussrichtung
- 19: Verteiler
- 20, 20.1,21, 21.1: Stirnseiten
- 22: Befestigungsmöglichkeiten

- 30: Tanksteuereinheit
- 31,33: Drucksensor
- 32, 34: Temperatursensor

- 40, 50: Drucktank
- 41, 51: Tankventil
- 42: Temperatursensor
- 43: Drucksensor

## Patentansprüche

1. Kraftstoffsystem (1,1a,1.1) zum Einbau in einem Wasserstoff-betriebenen Fahrzeug und für einen oder mehrere Wasserstoff-Drucktanks (40,50), auf Hochdruck-Niveau mit mindestens 200 bar ausgelegt, umfassend einen Anschluss für eine Eingangsleitung (3,3a), einen Anschluss für eine Ausgangsleitung (4) und zumindest folgende interne Komponenten:
Einen Druckminderer (10), einen Gasfilter (11), ein Absperrventil (15), ein Entlüftungsventil (13), ein Überdruck-Sicherheitsventil (14) und einen Drucksensor (31,33),
wobei der Druckminderer (10) so ausgeführt ist, dass er den Druck des Wasserstoffs vom Hochdruck-Niveau aus dem Drucktank auf ein Mitteldruck-Niveau zwischen 3 bar und 30 bar reduzieren kann, indem der Druckminderer (10) als zweistufiger Druckminderer ausgeführt ist, wobei die erste Stufe den Druck aus dem Drucktank auf ein Zwischen-Niveau zwischen 40 und 80 bar reduziert und die zweite Stufe den Druck weiter auf das Mitteldruck-Niveau reduziert,
und wobei die internen Komponenten und Gasleitungen, die diese internen Komponenten miteinander verbinden, in einer integralen und in sich tragenden Baueinheit (2,2a,2.1) angeordnet sind.

2. Kraftstoffsystem (1,1a,1.1) nach Anspruch 1
**dadurch gekennzeichnet,**
**dass** es als interne Komponenten ein Rückschlagventil (16) und eine Verteilung (19) auf mehrere Tankleitungen (8,9) umfasst, wobei die Tankleitungen (8,9) aus der Baueinheit (2,2a,2.1) nach außen führen und für jeden Drucktank (40,50) ein Anschluss vorhanden ist.

3. Kraftstoffsystem (1,1a,1.1) nach einem der Ansprüche 1 oder 2
**dadurch gekennzeichnet,**
**dass** der Tankstutzen 7 ein Teil der Baueinheit (2,2a,2.1) ist.

4. Kraftstoffsystem (1,1a,1.1) nach einem der vorherigen Ansprüche
**dadurch gekennzeichnet,**
**dass** am Druckminderer (10) eine Kühleinrichtung (17) vorgesehen ist.

5. Kraftstoffsystem (1,1a,1.1) nach einem der vorherigen Ansprüche
**dadurch gekennzeichnet,**
**dass** eine elektronische Tanksteuereinheit (30) vorhanden ist, welche an der Baueinheit (2,2a,2.1) befestigt und von dieser getragen ist, wobei die Tanksteuereinheit geeignet ist, die Signale der vorhandenen Sensoren zu empfangen und zu verarbeiten und eines oder mehrere Ausgangssignale zu erzeugen.

6. Kraftstoffsystem (1,1a,1.1) nach Anspruch 5
**dadurch gekennzeichnet,**
**dass** die Tanksteuereinheit (30) eingerichtet ist, von jedem Drucktank (40,50) ein Temperatursensorsignal zu empfangen und insbesondere von jedem Drucktank (40,50) ein Drucksensorsignal zu empfangen.

7. Kraftstoffsystem (1,1a,1.1) nach einem der Ansprüche 5 oder 6
**dadurch gekennzeichnet,**
**dass** die Tanksteuereinheit (30) so eingerichtet ist, dass sie mit einer Wasserstoff-Tankstelle kommunizieren kann und insbesondere einen Tankvorgang steuern kann.

8. Kraftstoffsystem (1,1a,1.1) nach einem der vorherigen Ansprüche
**dadurch gekennzeichnet,**
**dass** als interne Komponente ein Temperatursensor (32,34) vorhanden ist, wobei bevorzugt als interne Sensoren nur ein Drucksensor (33) und ein Temperatursensor (34), jeweils vor dem Druckminderer (10) angeordnet, vorhanden sind.

9. Kraftstoffsystem (1,1a,1.1) nach einem der vorherigen Ansprüche
**dadurch gekennzeichnet,**
**dass** es als interne Komponente noch einen zweiten Drucksensor (31,33) und/oder noch einen zweiten Temperatursensor (32,34) umfasst, wobei bevorzugt ein Drucksensor (33) und ein Temperatursensor (34) vor dem Druckminderer (10) und ein Drucksensor (31) und ein Temperatursensor (32) nach dem Druckminderer (10) angeordnet sind.

10. Kraftstoffsystem (1,1a,1.1) nach einem der vorherigen Ansprüche
**dadurch gekennzeichnet,**
**dass** es als interne Komponente einen Wasserstoff-Reinheitssensor umfasst.

11. Kraftstoffsystem (1,1a,1.1) nach einem der vorherigen Ansprüche
**dadurch gekennzeichnet,**
**dass** die internen Komponenten in Durchflussrichtung (18) in folgender Reihenfolge von der Eingangsleitung (3) bis zur Ausgangsleitung (4) angeordnet sind:
Gasfilter (11), Druckminderer (10), Entlüftungsventil (13), Sicherheitsventil (14), Absperrventil (15).

12. Kraftstoffsystem (1,1a,1.1) nach einem der vorherigen Ansprüche
**dadurch gekennzeichnet,**
**dass** die Baueinheit (2,2a,2.1) aus mehreren Teileinheiten zusammengesetzt ist, die so aneinander befestigt sind, dass sie eine in sich tragende Baueinheit bilden.

13. Kraftstoffsystem (1,1a,1.1) nach einem der vorherigen Ansprüche
**dadurch gekennzeichnet,**
**dass** die Baueinheit (2,2a,2.1) eine Teileinheit umfasst, welche ein Gehäuse 5, bevorzugt aus einem Alu-Guss-Werkstoff, aufweist, in welchem zumindest die folgenden internen Komponenten angeordnet sind: der Druckminderer (10), der Drucksensor (31,33), das Entlüftungsventil (13), das Überdruck-Sicherheitsventil (14) und das Absperrventil (15).

14. Kraftstoffsystem (1,1a,1.1) nach einem der vorherigen Ansprüche
**dadurch gekennzeichnet,**
**dass** die Baueinheit (2,2a,2.1) Befestigungsmöglichkeiten (22) aufweist, über die das Kraftstoffsystem (1,1a,1.1) an einer Tragstruktur, die die Drucktanks im Fahrzeug befestigt, montiert werden kann.

## Claims

1. Fuel system (1, 1a, 1.1) for installation in a hydrogen-powered vehicle and for one or more hydrogen pressure tanks (40, 50) designed for a high pressure level of at least 200 bar, comprising a connection for an input line (3, 3a), a connection for an output line (4) and at least the following internal components:
a pressure reducer (10), a gas filter (11), a shut-off valve (15), a vent valve (13), an overpressure safety valve (14) and a pressure sensor (31, 33);
wherein the pressure reducer (10) is designed such that it can reduce the pressure of the hydrogen from the high pressure level from the pressure tank to a medium pressure level of between 3 bar and 30 bar by way of the pressure reducer (10) being designed as a two-stage pressure reducer, wherein the first stage reduces the pressure from the pressure tank to an intermediate level of between 40 and 80 bar and the second stage further reduces the pressure to the medium pressure level,
and wherein the internal components and gas lines, which connect these internal components to each other, are arranged in an integral and self-supporting unit (2, 2a, 2.1).

2. Fuel system (1, 1a, 1.1) according to Claim 1,
**characterized**
**in that** it comprises, as internal components, a non-return valve (16) and a distribution system (19) to several tank lines (8, 9), wherein the tank lines (8, 9) lead out of the unit (2, 2a, 2.1) to the outside and a connection is provided for each pressure tank (40, 50).

3. Fuel system (1, 1a, 1.1) according to either of Claims 1 and 2,
**characterized**
**in that** the tank nozzle (7) is part of the unit (2, 2a, 2.1).

4. Fuel system (1, 1a, 1.1) according to any of the preceding claims,
**characterized**
**in that** a cooling device (17) is provided on the pressure reducer (10).

5. Fuel system (1, 1a, 1.1) according to any of the preceding claims,
**characterized**
**in that** an electronic tank control unit (30) is provided, which is fastened to the unit (2, 2a, 2.1) and is supported by it, wherein the tank control unit is suitable for receiving and for processing the signals from the sensors that are provided and for generating one or more output signals.

6. Fuel system (1, 1a, 1.1) according to Claim 5,
**characterized**
**in that** the tank control unit (30) is configured to receive a temperature sensor signal from each pressure tank (40, 50) and in particular to receive a pressure sensor signal from each pressure tank (40, 50).

7. Fuel system (1, 1a, 1.1) according to either of Claims 5 and 6,
**characterized**
**in that** the tank control unit (30) is configured such that it can communicate with a hydrogen fueling station and in particular can control a fueling process.

8. Fuel system (1, 1a, 1.1) according to any of the preceding claims,
**characterized**
**in that** a temperature sensor (32, 34) is provided as an internal component, wherein preferably only one pressure sensor (33) and one temperature sensor (34), in each case arranged upstream of the pressure reducer (10), are provided as internal sensors.

9. Fuel system (1, 1a, 1.1) according to any of the preceding claims,
**characterized**
**in that** it comprises, as internal components, a further second pressure sensor (31, 33) and/or a further second temperature sensor (32, 34), wherein preferably a pressure sensor (33) and a temperature sensor (34) are arranged upstream of the pressure reducer (10) and a pressure sensor (31) and a temperature sensor (32) are arranged downstream of the pressure reducer (10).

10. Fuel system (1, 1a, 1.1) according to any of the preceding claims,
**characterized**
**in that** it comprises, as an internal component, a hydrogen-purity sensor.

11. Fuel system (1, 1a, 1.1) according to any of the preceding claims,
**characterized**
**in that** the internal components are arranged in the following order from the input line (3) to the output line (4) in the throughflow direction (18):
gas filter (11), pressure reducer (10), vent valve (13), safety valve (14), shut-off valve (15).

12. Fuel system (1, 1a, 1.1) according to any of the preceding claims,
**characterized**
**in that** the unit (2, 2a, 2.1) is composed of several subunits, which are fastened to one another such that they form a self-supporting unit.

13. Fuel system (1, 1a, 1.1) according to any of the preceding claims,
**characterized**
**in that** the unit (2, 2a, 2.1) comprises a sub-unit, which has a housing (5), preferably composed of a cast aluminum material, in which at least the following internal components are arranged: the pressure reducer (10), the pressure sensor (31, 33), the vent valve (13), the overpressure safety valve (14) and the shut-off valve (15).

14. Fuel system (1, 1a, 1.1) according to any of the preceding claims,
**characterized**
**in that** the unit (2, 2a, 2.1) has fastening options (22) by means of which the fuel system (1, 1a, 1.1) can be fitted to a supporting structure, which fastens the pressure tanks in the vehicle.

## Revendications

1. Système de carburant (1, 1a, 1.1) destiné à être installé dans un véhicule fonctionnant à l'hydrogène et destiné à un ou plusieurs réservoirs d'hydrogène sous pression (40, 50), conçus à un niveau de pression élevé d'au moins 200 bars, ledit système de carburant comprenant un raccord destiné à un conduit d'entrée (3, 3a), un raccord destiné à un conduit de sortie (4) et au moins les composants internes suivants :
un réducteur de pression (10), un filtre à gaz (11), une vanne d'arrêt (15), une vanne de purge (13), une vanne anti-surpression (14) et un capteur de pression (31, 33) ;
le réducteur de pression (10) étant conçu de manière à pouvoir réduire la pression de l'hydrogène du niveau de pression élevé du réservoir sous pression à un niveau de pression moyen compris entre 3 bars et 30 bars, car le réducteur de pression (10) est conçu comme un réducteur de pression à deux étages, le premier étage réduisant la pression du réservoir sous pression à un niveau intermédiaire compris entre 40 et 80 bars et le deuxième étage réduisant encore la pression jusqu'au niveau de pression moyen,
et les composants internes et les conduits de gaz, qui relient ces composants internes entre eux, étant disposés dans une unité structurelle intégrale et autoportante (2, 2a, 2.1).

2. Système de carburant (1, 1a, 1.1) selon la revendication 1,
**caractérisé en ce que**
il comprend comme composants internes une vanne anti-retour (16) et une distribution (19) vers plusieurs conduits de réservoir (8, 9), les conduits de réservoir (8, 9) menant de l'unité structurelle (2, 2a, 2.1) à l'extérieur et un raccord étant prévu pour chaque réservoir sous pression (40, 50).

3. Système de carburant (1, 1a, 1.1) selon l'une des revendications 1 ou 2,
**caractérisé en ce que**
la tubulure de réservoir (7) fait partie de l'unité structurelle (2, 2a, 2.1).

4. Système de carburant (1, 1a, 1.1) selon l'une des revendications précédentes,
**caractérisé en ce que**
un dispositif de refroidissement (17) est prévu sur le réducteur de pression (10).

5. Système de carburant (1, 1a, 1.1) selon l'une des revendications précédentes,
**caractérisé en ce que**
une unité de commande de réservoir électronique (30) est prévue, qui est fixée à l'unité structurelle (2, 2a, 2.1) et portée par celle-ci, l'unité de commande de réservoir étant adaptée pour recevoir et traiter les signaux des capteurs présents et générer un ou plusieurs signaux de sortie.

6. Système de carburant (1, 1a, 1.1) selon la revendication 5,
**caractérisé en ce que**
l'unité de commande de réservoir (30) est conçue pour recevoir un signal de capteur de température de chaque réservoir sous pression (40, 50) et en particulier pour recevoir un signal de capteur de pression de chaque réservoir sous pression (40, 50).

7. Système de carburant (1, 1a, 1.1) selon l'une des revendications 5 ou 6,
**caractérisé en ce que**
l'unité de commande de réservoir (30) est conçue de manière à pouvoir communiquer avec une station de ravitaillement en hydrogène et notamment commander un processus de ravitaillement.

8. Système de carburant (1, 1a, 1.1) selon l'une des revendications précédentes,
**caractérisé en ce que**
un capteur de température (32, 34) est prévu comme composant interne, de préférence un seul capteur de pression (33) et un seul capteur de température (34), disposés chacun avant le réducteur de pression (10), étant prévus comme capteurs internes.

9. Système de carburant (1, 1a, 1.1) selon l'une des revendications précédentes,
**caractérisé en ce que**
il comprend un deuxième capteur de pression (31, 33) et/ou un deuxième capteur de température (32, 34) comme composant interne, de préférence un capteur de pression (33) et un capteur de température (34) étant disposés avant le réducteur de pression (10) et un capteur de pression (31) et un capteur de température (32) étant disposés après le réducteur de pression (10).

10. Système de carburant (1, 1a, 1.1) selon l'une des revendications précédentes,
**caractérisé en ce que**
il comprend un capteur de pureté d'hydrogène comme composant interne.

11. Système de carburant (1, 1a, 1.1) selon l'une des revendications précédentes,
**caractérisé en ce que**
les composants internes sont disposés dans l'ordre suivant dans le sens d'écoulement (18) depuis le conduit d'entrée (3) jusqu'au conduit de sortie (4) : un filtre à gaz (11), un réducteur de pression (10), une vanne de purge (13), une vanne de sécurité (14), une vanne d'arrêt (15).

12. Système de carburant (1, 1a, 1.1) selon l'une des revendications précédentes,
**caractérisé en ce que**
l'unité structurelle (2, 2a, 2.1) est composée de plusieurs sous-unités qui sont fixées les unes aux autres de manière à former une unité structurelle autoportante.

13. Système de carburant (1, 1a, 1.1) selon l'une des revendications précédentes,
**caractérisé en ce que**
l'unité structurelle (2, 2a, 2.1) comprend une sous-unité qui comporte un boîtier (5), de préférence en fonte d'aluminium, dans lequel sont disposés au moins les composants internes suivants : le réducteur de pression (10), le capteur de pression (31, 33), la vanne de purge (13), la vanne anti-surpression (14) et la vanne d'arrêt (15).

14. Système de carburant (1, 1a, 1.1) selon l'une des revendications précédentes,
**caractérisé en ce que**
l'unité structurelle (2, 2a, 2.1) présente des possibilités de fixation (22) permettant de monter le système de carburant (1, 1a, 1.1) sur une structure de support qui fixe les réservoirs sous pression dans le véhicule.
